(19) Europäisches Patentamt / European Patent Office / Office européen des brevets

(11) **EP 4 127 785 B1**

(12) **EUROPÄISCHE PATENTSCHRIFT**

(45) Veröffentlichungstag und Bekanntmachung des Hinweises auf die Patenterteilung:
**09.04.2025 Patentblatt 2025/15**

(21) Anmeldenummer: **21706909.5**

(22) Anmeldetag: **18.02.2021**

(51) Internationale Patentklassifikation (IPC):
**G02B 1/12** (2006.01)   **G02B 5/18** (2006.01)
**G02B 27/42** (2006.01)   **G02B 5/08** (2006.01)
**B23K 26/53** (2014.01)   **C03C 23/00** (2006.01)

(52) Gemeinsame Patentklassifikation (CPC):
**G02B 1/12; B23K 26/0006; B23K 26/0624;
B23K 26/082; B23K 26/083; B23K 26/55;
C03C 17/36; C03C 17/3636; C03C 17/3649;
G02B 5/0891; G02B 5/1861; G02B 27/4233;
B23K 2103/172; B23K 2103/54; C03C 2217/77;**
(Forts.)

(86) Internationale Anmeldenummer:
**PCT/EP2021/054010**

(87) Internationale Veröffentlichungsnummer:
**WO 2021/190831 (30.09.2021 Gazette 2021/39)**

(54) **VERFAHREN ZUR HERSTELLUNG EINES KONTINUIERLICHEN DIFFRAKTIVEN OPTISCHEN ELEMENTES UND KONTINUIERLICHES DIFFRAKTIVES OPTISCHES ELEMENT**

METHOD FOR PRODUCING A CONTINUOUS DIFFRACTIVE OPTICAL ELEMENT AND CONTINUOUS DIFFRACTIVE OPTICAL ELEMENT

PROCÉDÉ DE FABRICATION D'UN ÉLÉMENT OPTIQUE DIFFRACTIF CONTINU ET ÉLÉMENT OPTIQUE DIFFRACTIF CONTINU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2020 DE 102020107944**

(43) Veröffentlichungstag der Anmeldung:
**08.02.2023 Patentblatt 2023/06**

(73) Patentinhaber: **Rheinische Friedrich-Wilhelms-Universität Bonn**
**53113 Bonn (DE)**

(72) Erfinder:
• **WEITZ, Martin**
  **53127 Bonn (DE)**
• **WAHL, Christian**
  **53121 Bonn (DE)**

• **DUNG, David**
  **53121 Bonn (DE)**

(74) Vertreter: **Michalski Hüttermann & Partner Patentanwälte mbB**
**Kaistraße 16A**
**40221 Düsseldorf (DE)**

(56) Entgegenhaltungen:
DE-A1- 10 158 859   DE-A1- 102016 203 591
DE-A1- 102018 200 029   DE-A1- 102019 204 345
DE-A1- 19 823 257   DE-B4- 10 158 859

• **B. W. SHORE ET AL: "Design of high-efficiency dielectric reflection gratings", JOURNAL OF THE OPTICAL SOCIETY OF AMERICA A, vol. 14, no. 5, 1 May 1997 (1997-05-01), pages 1124, XP055236864, ISSN: 1084-7529, DOI: 10.1364/JOSAA.14.001124**

(52) Gemeinsame Patentklassifikation (CPC): (Forts.)
C03C 2218/32

**Beschreibung**

Die Erfindung betrifft ein Verfahren zur Herstellung eines kontinuierlichen diffraktiven optischen Elementes zur Strahlenformung eines Laserstrahles mit einer ersten Wellenlänge.

Weiterhin betrifft die Erfindung das kontinuierliche diffraktive optische Element.

Diffraktive optische Elemente, abgekürzt DOE, erlauben die Strahlenformung eines Laserstrahles, sprich die gezielte Veränderung der Intensitätsverteilung des Laserstrahlprofils senkrecht zur Ausbreitungsrichtung. Zur Strahlenformung wird das DOE in den Laserstrahl eingebracht, wobei es durch unterschiedliche optische Weglängen am DOE zu Phasenmodulationen des Laserstrahls kommt, wodurch Interferenzmuster entstehen. Durch konstruktive und destruktive Überlagerung wird die Intensität des Laserstrahls räumlich moduliert. So lässt sich das in der Regel Gauß-förmige Intensitätsprofil des Laserstrahls gezielt verändern und beispielsweise in ein Doughnut-förmiges Intensitätsprofil überführen.

Im Stand der Technik bekannte DOEs sind Glas- oder Kunststoffträger, auf die durch Laserlithographie und/oder Fotolithographie sowie durch verschiedene nass- und trockenchemische Ätzprozesse Mikrostrukturen aufgebracht werden. Beispielsweise kann als Mikrostruktur ein Blazegitter aufgebracht werden, also ein optisches Gitter, bei dem die einzelnen Gitterlinien einen dreieckigen Querschnitt in Sägezahnform aufweisen, wodurch die Beugungseffizienz für eine bestimmte Beugungsordnung maximal wird.

Allerdings ist die Herstellung von DOE mit hoher Beugungseffizienz sehr aufwändig. Für eine hoher Beugungseffizienz ist es notwendig, dass die Mikrostrukturen ein möglichst kontinuierliches Höhenprofil aufweisen, was wiederum einen sehr hohen technischen Fertigungsaufwand mit sich bringt. Bedingt durch das Fertigungsverfahren mittels lithographischem Ätzprozess wird das Höhenprofil in der Regel durch ein Treppenstufenprofil mit einer diskreten Anzahl von Treppenstufen approximiert, wobei durch Wiederholung des lithografischen Ätzprozesses die Anzahl Treppenstufen erhöht und somit das Höheprofil besser approximiert werden kann. Solche DOEs mit mehreren Stufen werden als multilevel DOEs bezeichnet. Prozessbedingt ist die Anzahl Stufen allerdings auf etwa 16 beschränkt, da nach etwa vier Wiederholungen des Ätzprozesses die herstellungsbedingten Ungenauigkeiten zunehmen und keine höhere Beugungseffizienz erzielt wird. Somit sind multilevel DOE physikalisch in ihrer Beugungseffizienz auf etwa 98% begrenzt.

Weiterhin sind aus dem Stand der Technik quasi-kontinuierliche DOEs bekannt, die mittels eines maskenlosen Lithografie-Verfahrens unter Einsatz einer zwei-Photonen-Polymerisation hergestellt werden. Hierzu wird in der Regel mittels Laserstrahlung ein auf ein Substrat aufgetragenes Polymer direkt strukturiert. Die quasi-kontinuierlichen DOEs weisen eine Beugungseffizienz auf, die mehr als 50 Stufen entspricht. Allerdings ist der Einsatz solcher quasi-kontinuierlicher DOEs beschränkt, da sie sich aufgrund der niedrigen thermischen Zerstörschwelle der Polymere nicht für den Einsatz bei Hochleistungslasern eignen.

Die Druckschrift Smjuk, A.Y., Lawandy, N.M.: Direct laser writing of diffractive optics in glass. Opt. Lett., 1997, Vol. 22, No. 13, pp. 1030-1032 beschreibt ein Verfahren um mittels Laser mit geringer Leistung und eines Wärmeausdehnungsprozesses aus mit Halbleitern dotierten Gläsern diffraktive optische Elemente herzustellen.

Die Druckschrift Shore, B.W. et al.: Design of high-efficiency dielectric reflection gratings, J. Opt. Soc. Am. A, 1997, Vol. 14, No. 5, pp. 1124-1136 beschreibt Beispiele für Designs für rein dielektrische Reflexionsgitter, wobei der Zusammenhang zwischen Transmissionsgittern und Reflexionsgittern kommentiert wird. Weiterhin werden Beispiele für hocheffiziente (95%) Gitter, die unter Verwendung von Hafnium- und Silica-Mehrfachschichten hergestellt werden, beschrieben.

Die Druckschrift US 2009/0 273 772 A1 beschreibt eine lichtreflektierende Maske umfassend eine reflektierende Schicht, die auf einem Substrat vorgesehen ist und Licht reflektiert, eine absorbierende Schicht, die auf der reflektierenden Schicht vorgesehen ist und Licht absorbiert, ein Vorrichtungsmuster, das in einem ersten Bereich der absorbierenden Schicht gebildet ist, und ein Reflexionsvermögens-Messmuster, das in einem zweiten Bereich der absorbierenden Schicht gebildet ist.

Die Druckschrift DE 10 2018 200 029 A1 beschreibt ein Verfahren zum Erzeugen von Oberflächenstrukturen an einem lasertransparenten Werkstück, insbesondere aus Glas oder Kunststoff. Dabei werden ein oder mehrere UKP-Laserpulse durch die Werkstückoberfläche hindurch in das lasertransparente Werkstück fokussiert, um im Werkstückinneren durch Erwärmen des Fokusvolumens eine Modifikation aufzuschmelzen, wobei die Pulsparameter des einen oder der mehreren UKP-Laserpulse und die Tiefe des Laserfokus im Werkstück derart gewählt werden, dass der oberste Teil der aufgeschmolzenen Modifikation gerade die Werkstückoberfläche berührt und durch thermische Materialexpansion der aufgeschmolzenen Modifikation die Werkstückoberfläche nach außen zu einer konvexen Oberflächenstruktur gewölbt wird.

Die Druckschrift DE 101 58 859 A1 beschreibt ein Verfahren und eine Vorrichtung zur Analyse und Überwachung der Lichtintensitätsverteilung über den Querschnitt eines Laserstrahls. Dabei wird ein Laserstrahl mit einem Laserspiegel umgelenkt und lokale Wärmeausdehnungen des Laserspiegels werden aufgrund der auf den Laserspiegel einfallenden unterschiedlichen Lichtintensitäten interferometrisch erfasst.

Demnach ist es die Aufgabe der Erfindung, ein DOE, ein Verfahren zur Herstellung eines solchen DOEs bereitzustellen, wobei das DOE eine hohe Beugungseffizienz aufweist und für den Einsatz der Strahlenformung von Hochleistungslasern geeignet ist.

Diese Aufgabe wird durch die Merkmale der unabhängigen Patentansprüche gelöst. Bevorzugte Weiterbildungen finden sich in den Unteransprüchen.

Die Erfindung betrifft ein Verfahren zum Herstellen eines diffraktiven optischen Elementes zur Strahlenformung eines Laserstrahles mit einer ersten Wellenlänge von wenigstens 100 nm umfassend die Schritte:

- Bereitstellen eines Laserspiegels, wobei der Laserspiegel einen schichtartigen Aufbau aus einem Substrat, einer Dielektrika-Schicht und optional einer Absorptionsschicht aufweist, wobei die Dielektrika-Schicht an dem Substrat anliegt oder wobei sich die Absorptionsschicht zwischen dem Substrat und der Dielektrika-Schicht befindet,
- Erzeugen einer Mehrzahl von Auswölbungen der Dielektrika-Schicht, durch Behandeln des Laserspiegels mit einer Serie fokussierter Heizlaserstrahlen mit einer zweiten Wellenlänge, wobei die Mehrzahl von Auswölbungen eine Höhe senkrecht zur Dielektrika-Schicht aufweisen, und wobei wenigstens eine Auswölbung eine Höhe von zumindest der Hälfte der ersten Wellenlänge aufweist.

Der Kern der Erfindung liegt darin, dass eine kontinuierliches DOE hergestellt wird, indem mittels gezielter Erwärmung Auswölbungen in einem Laserspiegel erzeugt werden. Durch das Verfahren lässt sich ein DOE mit einer sehr hohe Beugungseffizienz erzeugen, welche umgerechnet auf die Herstellungsgenauigkeit von quasikontinuierlichen DOEs einer Anzahl Stufen von mehr als 2500 entsprechen kann. Der bereitgestellte Laserspiegel und das durch das Verfahren hergestellte DOE umfassen das Substrat, die optionale Absorptionsschicht und die Dielektrika-Schicht, die alle bevorzugt zueinander parallel sind, wobei die Dielektrika-Schicht an dem Substrat anliegt oder bei Vorhandensein der Absorptionsschicht, die Absorptionsschicht zwischen dem Substrat und der Dielektrika-Schicht angeordnet ist. Insbesondere ist vorgesehen, dass an eine Oberseite des Substrats eine Unterseite der Dielektrika-Schicht oder eine Unterseite der Absorptionsschicht grenzt. Weiter bevorzugt ist vorgesehen, dass bei Vorhandensein der Absorptionsschicht eine Oberseite der Absorptionsschicht an eine Unterseite der Dielektrika-Schicht grenzt. In anderen Worten entspricht die Oberseite der Dielektrika-Schicht der Oberseite des DOE bzw. der Oberseite des Laserspiegels.

Im Gegensatz zu den im Stand der Technik bekannten Verfahren, bei denen Mikrostrukturierungen durch Hinzufügen von Material und/oder durch Entfernen von Material erstellt werden und derart das DOE hergestellt wird, sieht das vorliegende Verfahren also vor, dass durch das Erzeugen der Mehrzahl von Auswölbungen der Dielektrika-Schicht des Laserspiegels die Mikrostrukturierung stattfindet. Somit ist es nicht erforderlich nach dem Behandeln des Laserspiegels mit der Serie fokussierter Heizlaserstrahlen mit der zweiten Wellenlänge zusätzliche Materialschichten aufzutragen und/oder Materialschichten zu entfernen, um das DOE mit der sehr hohe Beugungseffizienz zu erzeugen. In anderen Worten wird durch das Bereitstellen des Laserspiegels, der selbst das Substrat und die Dielektrika-Schicht umfasst, und die daran anschließende Behandlung des Laserspiegels mit den fokussierten Heizlaserstrahlen direkt und somit ohne das Hinzufügen und/oder Entfernen von Material das DOE hergestellt. Im Gegensatz zu den Verfahren des Stands der Technik wird beim erfindungsgemäßen Verfahren also ein zeitaufwendiger lithografischer und/oder beschichtender Prozesse eingespart.

Beim Verfahren werden Auswölbungen in der Dielektrika-Schicht erzeugt, die zu einer Mikrostrukturierung der Oberfläche der Dielektrika-Schicht führen. Dies bedeute insbesondere, dass die Oberfläche der Dielektrika-Schicht nach dem Verfahren nicht eben ist, sondern lokale Bereiche aufweist, die eine andere Höhe aufweisen als vor dem Verfahren. Die Höhe der Auswölbungen bezieht sich auf eine Erstreckung der Auswölbung senkrecht zur Dielektrika-Schicht bezogen auf einen Bereich um den lokalen Bereich herum. Bevorzugt sind die Auswölbungen rotationssymmetrisch, wobei die Rotationsachse der Auswölbungen senkrecht zur Absorptionsschicht liegt. Beispielsweise sind die Auswölbungen projiziert auf eine Ebene parallel zur Absorptionsschicht kreisförmig. Weiter bevorzugt ist bei rotationssymmetrischen Auswölbungen die Halbwertsbreite der rotationssymmetrischen Auswölbungen nicht größer als 6 $\mu$m.

Die Höhe der Auswölbungen beeinflusst den Einsatz des DOE für die Strahlenformung des Laserstrahles mit der ersten Wellenlänge, da eine Strahlenformung mit dem DOE erst möglich ist, wenn wenigsten eine Auswölbungen eine Höhe von zumindest der Hälfte der ersten Wellenlänge aufweist. Durch das Verfahren lassen sich DOEs herstellen, die sich zur Strahlformung eines Laserstrahles mit einer ersten Wellenlänge von wenigstens 100 nm eignen. In anderen Worten bedeutet dies, dass wenigstens eine Auswölbung eine Höhe größer als 50 nm aufweist.

Das Verfahren hat den Vorteil, dass durch die Behandlung mit dem Heizlaserstrahl die Auswölbungen gezielt erzeugt werden können, wobei einerseits der Ort der Auswölbung bezogen auf die Ebene parallel zur Dielektrika-Schicht, sowie die Höhe der Auswölbung kontrolliert werden kann. Mittels des Verfahrens lassen sich Auswölbungen mit unterschiedlicher Höhe erzeugen, wobei die Höhenauflösung bei wenigstens 0,5 nm liegt. Insbesondere liegt die Höhenauflösung bei wenigstens 0,1 nm. In anderen Worten erlaubt das Verfahren das Erzeugen von sehr fein abgestuften Höhenprofilen als Strukturierung. Das Verfahren ermöglicht somit das Herstellen von kontinuierlichen DOEs mit einer sehr hohen Beugungseffizienz, welche umgerechnet auf die Herstellungsgenauigkeit von quasikontinuierlichen DOEs einer Anzahl Stufen von mehr als 2500 entspricht.

Hinsichtlich der Höhe der Auswölbungen und der Halbwertsbreite bei rotationssymmetrischen Auswölbungen ist bevorzugt vorgesehen, dass zwecks Bestimmung dieser Parameter eine topografische Aufnahme der Dielektrika-Schicht mittels eines Mirau-Interferometers erstellt wird: Das Mirau-Interferometer umfasst eine Beleuchtungsquelle geringer Kohärenzlänge, bevorzugt eine grüne LED mit zentraler Wellenlänge von $\lambda = 530$ nm, eine Kamera zur Bildaufnahme (DCC1545M, Firma Thorlabs) und ein Mirau-Mikroskopobjektiv (CF Plan 20x DI, Firma Nikon). Eine Frontfacette des Mirau-Mikroskopobjektivs fungiert bevorzugt als Strahlteiler, wobei die Hälfte des LED-Lichts auf einen Referenzspiegel im Inneren des Mirau-Mikroskopobjektivs zurückgeworfen wird. Diese Hälfte des LED-Lichts durchläuft bevorzugt den Referenzarm des Interferometers. Das durch die Frontfacette transmittierte LED-Licht wird bevorzugt von der Dielektrika-Schicht des DOEs zurückreflektiert und mit dem LED-Licht des Referenzarms überlagert. Damit auf der Kamera ein Interferenzmuster trotz der geringen Kohärenzlänge des LED-Lichts sichtbar wird, sind die Weglängen beider Interferometerarme bis auf wenige Wellenzüge bevorzugt identisch gewählt ($z_0 \approx z_{Ref}$.). Eine Topografie der Dielektrika-Schicht des DOEs wird bevorzugt dadurch erstellt, dass das DOE mit einem Piezokristall langsam um rund einen Mikrometer verschoben wird (Zeitskala ~ Sekunden) und währenddessen mit der Kamera die Interferenzbilder aufgenommen werden. Anschließend wird bevorzugt für jeden Bildpunkt der Kamera (x = 1 bis 1000; y = 1 bis 1000) eine Helligkeitsabfolge aus den gespeicherten Aufnahmen erstellt (typischerweise 50 Interferenzbilder). Durch das Anpassen einer Funktion ~ $\sin(\omega t + \varphi_0)$ mit Kreisfrequenz $\omega$ lässt sich daraus für jeden Bildpunkt eine Phase $\varphi_0(x, y)$ ermitteln. Dies geschieht bevorzugt für alle Bildpunkte (x, y) der Kamera, sodass sich eine Phasenkarte erstellen lässt, bei der an jedem Ort des Kamerabildes die angepasste Phase eingetragen werden kann. Innerhalb der Phasenkarte kann es zu Phasensprüngen zwischen benachbarten Bildpunkten kommen, da die angepasste Phase auf den Bereich 0 bis $2\pi$ beschränkt ist. Durch Erweitern des Bereichs über 0 bis $2\pi$ hinaus, können die Phasenunstetigkeiten aufgelöst werden (phase-unwrapping). Anschließend können mittels folgender Formel die Phasen $\varphi_0(x, y)$ in der Phasenkarte in Höhen h(x, y) umgerechnet werden:

$$h(x, y) = \frac{\lambda}{2\pi} \frac{\varphi_0(x, y)}{2}$$

Auf diese Weise entsteht eine topographische Karte der Dielektrika-Schicht des DOEs. Bevorzugt wird zur Bestimmung der Höhe der Auswölbungen ein Bereich der topographischen Karte verwendet, der keine Auswölbungen aufweist, um eine Referenzhöhe auf Null zu setzen. Die Datenpunkte der topographischen Karte der Dielektrika-Schicht werden anschließen bevorzugt verwendet, um an Bereichen mit einer Auswölbung eine Funktion anzupassen, die dem Höhenprofil der Auswölbung entspricht. Bei rotationssymmetrischen Auswölbungen wird bevorzugt eine zweidimensionale Gauß-Funktion angepasst. Weiter bevorzugt wird über die angepasste Funktion die Höhe der Auswölbung und die Halbwertsbreite der Auswölbung bestimmt.

Gemäß einer bevorzugten Weiterbildung ist vorgesehen, dass der bereitgestellte Laserspiegel zur Reflexion von Laserlicht der ersten Wellenlänge geeignet ist. Bevorzugt handelt es sich beim Laserspiegel, der im ersten Schritt des Verfahrens bereitgestellt wird und quasi den Rohling des DOEs darstellt, um einen hochreflektiven Laserspiegel zur Reflexion des Laserstrahls mit der ersten Wellenlänge. Hochreflektiv bedeutet in diesem Zusammenhang, dass der Laserspiegel einen Reflexionsgrad für die erste Wellenlänge von mehr als 99% aufweist. Insbesondere ist vorgesehen, dass ein bereits beschichteter dielektrischer Laserspiegel verwendet werden kann. Weiter bevorzugt ist vorgesehen, dass der Laserspiegel zur Reflexion von Laserlicht mit einer ersten Wellenlänge größer 100 nm geeignet ist. In Hinblick auf den Einsatz des DOEs zur Strahlenformung von Hochleistungslasern ist weiter bevorzugt vorgesehen, dass der Laserspiegel zur Reflexion von Laserlicht mit einer Leistung größer 100 W/cm geeignet ist. Dies bedeutet auch, dass der Laserspiegel bevorzugt eine hohe Zerstörschwelle, von wenigstens 0.5 J/cm$^2$ bei einer Pulsdauer von wenigen Pikosekunden, sprich 1 - 30 ps, aufweist.

In diesem Zusammenhang ist gemäß einer bevorzugten Weiterbildung der Erfindung vorgesehen, dass der bereitgestellte Laserspiegel und das diffraktive optische Element eine Transmission von T ≤ 10$^{-2}$ für die erste Wellenlänge aufweisen. Insbesondere sieht das Verfahren vor, dass die Auswölbungen derart erzeugt werden, dass die Dielektrika-Schicht ihre hochreflektiven Eigenschaften behält. Dies bedeutet auch, dass die Dielektrika-Schicht durch die Behandlung des Laserspiegels mit der Serie fokussierter Heizlaserstrahlen mit der zweiten Wellenlänge nicht zerstört wird. Bevorzugt wird die Transmission bestimmt, indem die Leistung des Lasers bei der ersten Wellenlänge, vor und hinter dem diffraktiven optischen Element mit einer leistungskalibrierten Photodiode vermessen wird.

Gemäß einer bevorzugten Weiterbildung der Erfindung ist vorgesehen, dass die Absorptionsschicht aus Silizium oder Gold besteht und/oder das Substrat aus Glas, $CaF_2$, $MgF_2$ oder Saphir und/oder die Dielektrika-Schicht aus $SiO_2$, $Ta_2O_5$, $TiO_2$, $HfO_2$, $Al_2O_3$, $MgF_2$, $LaF_3$, und/oder $ZrO_2$ besteht. Besonders bevorzugt handelt es sich beim Silizium in der Absorptionsschicht um amorphes Silizium. Weiter bevorzugt ist vorgesehen, dass das Substrat aus Quarzglas besteht, um die Strahlenformung eines Laserstrahles mit hoher Leistung zu ermöglichen. Weiter bevorzugt ist vorgesehen, dass die Dielektrika-Schicht mehrere Schichten unterschiedlichen Materials umfasst, wobei ein erstes Material bezogen auf die erste Wellenlänge hochbrechend ist und ein zweites Material bezogen auf die erste Wellenlänge niedrigbrechen ist. Weiter bevorzugt ist vorgesehen, dass die Dielektrika-Schicht aus sich abwechselnden Schichten des hochbrechenden Materials und des niedrigbrechenden Materials besteht. Insbesondere ist vorgesehen, dass die Dielektrika-Schicht derart ausgestaltet ist, dass der Laserstrahl mit der ersten Wellenlänge an der Dielektrika-Schicht reflektiert wird. Dies bedeutet in anderen Worten, dass ein Reflexionsgrad der Dielektrika-Schicht für die erste Wellenlänge größer als 99% ist, sowohl für den bereitgestellten Laserspiegel, wie auch für das durch das Verfahren hergestellte DOE.

In Zusammenhang mit dem Erzeugen der Auswölbungen sieht das Verfahren vor, dass beim Behandeln des Laserspiegels mit einer Serie fokussierter Heizlaserstrahlen ein Wärmeeintrag des Heizlaserstrahls in ein Volumen der Dielektrika-Schicht oder in ein Volumen der Absorptionsschicht des Laserspiegels wenigstens 30 kJ/cm$^3$ beträgt. Dies ermöglicht auf besonders einfache Weise, Auswölbungen mit einer Höhe von mehr als 50 nm zu erzeugen.

In Zusammenhang mit der Höhe der Auswölbungen sieht das Verfahren vor, dass die Höhe der Auswölbungen durch einen Wärmeeintrag des Heizlaserstrahls pro Volumen in die Absorptionsschicht und/oder in die Dielektrika-Schicht beeinflusst werden kann. Gemäß einer bevorzugten Weiterbildung ist vorgesehen, dass beim Behandeln des Laserspiegels mit einer Serie fokussierter Heizlaserstrahlen die zweite Wellenlänge, eine Leistung des Heizlaserstrahls, eine Fokussierung des Heizlaserstrahls, eine Heizdauer, die Absorptionsschicht des Laserspiegels, die Dielektrika-Schicht des Laserspiegels und/oder eine Schichtdicke der Absorptionsschicht derart gewählt werden, dass wenigstens eine Auswölbung eine Höhe von zumindest der Hälfte der ersten Wellenlänge aufweist.

Der Wärmeeintrag des Heizlaserstrahls kann durch unterschiedliche Parameter gesteuert werden. Bevorzugt wird die Wellenlänge des Heizlaserstrahles, sprich die zweite Wellenlänge, und ein Absorptionsspektrum der Absorptionsschicht und/oder der Dielektrika-Schicht aufeinander abgestimmt. So wird sichergestellt, dass ein Anteil des Heizlaserstrahles von der Absorptionsschicht und/oder der Dielektrika-Schicht absorbiert wird.

In diesem Zusammenhang ist gemäß einer bevorzugten Weiterbildung vorgesehen, dass beim Behandeln des Laserspiegels mit einer Serie fokussierter Heizlaserstrahlen die zweite Wellenlänge zwischen 200 und 700 nm liegt und die Absorptionsschicht des Laserspiegels aus Silizium ist, oder dass die zweite Wellenlänge zwischen 200 und 2000 nm liegt und die Absorptionsschicht des Laserspiegels aus Gold ist, und/oder die zweite Wellenlänge zwischen 100 und 2000 nm liegt. Mittels dieser Kombinationen aus Wellenlänge des Heizlaserstrahls und Absorptionsschicht lassen sich sehr zuverlässig die Auswölbungen mit einer Höhe von mehr als 50 nm erzeugen. Wenn auf die Absorptionsschicht verzichtet wird, wird bevorzugt ein UV-Laser mit einer zweiten Wellenlänge im Bereich von 100 bis 400 nm zum Behandeln des Laserspiegels mit der Serie fokussierter Heizlaserstrahlen verwendet.

Wie bereits erwähnt kann der Wärmeeintrag des Heizlaserstrahls pro Volumen in die Absorptionsschicht und/oder Dielektrika-Schicht durch die Leistung des Heizlaserstrahles beeinflusst werden. Diesbezüglich ist gemäß einer bevorzugten Weiterbildung vorgesehen, dass beim Behandeln des Laserspiegels mit einer Serie fokussierter Heizlaserstrahlen die Leistung des Heizlaserstrahls wenigstens 10 mW beträgt. Besonders bevorzugt liegt die Leistung zwischen 10 und 1000 mW.

Weiter bevorzugt ist vorgesehen, dass beim Behandeln des Laserspiegels mit einer Serie fokussierter Heizlaserstrahlen der Heizlaserstrahl in seiner Leistung verändert wird. Darüber lässt sich auf einfache Weise die Höhe der Auswölbungen verändern. Insbesondere ist durch Verändern der Leistung des Heizlaserstrahles das Erzeugen von Auswölbungen mit unterschiedlicher Höhe sowie das Erzeugen von Höhenauflösungen von wenigstens 0,5 nm besonders einfach.

Hinsichtlich der Erzeugung der Auswölbungen ist gemäß einer bevorzugten Weiterbildung vorgesehen, dass beim Behandeln des Laserspiegels mit einer Serie fokussierter Heizlaserstrahlen der Heizlaserstrahl senkrecht durch das Substrat des Laserspiegels auf die Absorptionsschicht und/oder Dielektrika-Schicht trifft. In anderen Worten bedeutet dies, dass eine Rückseite des Laserspiegels mit der Serie fokussierter Heizlaserstrahlen bestrahlt wird. Weiter bevorzugt ist vorgesehen, das Substrat des Laserspiegels und die Wellenlänge des Heizlaserstrahls, sprich die zweite Wellenlänge, aufeinander abzustimmen, so dass der Heizlaserstrahl im Wesentlichen nicht vom Substrat absorbiert wird.

Wie bereits erwähnt, kann der Wärmeeintrag des Heizlaserstrahls pro Volumen in die Absorptionsschicht und/oder Dielektrika-Schicht durch unterschiedliche Parameter gesteuert werden. In diesem Zusammenhang ist vorgesehen, dass beim Behandeln des Laserspiegels mit einer Serie fokussierter Heizlaserstrahlen der Heizlaserstrahl mit einer Halbwertsbreite von höchstens 5 μm auf die Absorptionsschicht und/oder Dielektrika-Schicht fokussiert wird. Besonders bevorzugt ist vorgesehen, dass der Heizlaserstrahl eine Halbwertsbreite von 1,8 μm oder kleiner aufweist. Dies ermöglicht, lokal in der Absorptionsschicht und/oder Dielektrika-Schicht einen Wärmeeintrag zu generieren, so dass die Auswölbungen der Dielektrika-Schicht ebenfalls lokal sind. Insbesondere ist es möglich, mit dieser Fokussierung die Mehrzahl an Auswölbungen zu erzeugen, die bevorzugt 3 μm oder weniger als 3 μm voneinander beabstandet sind. Der Abstand zwischen zwei Auswölbungen bezieht sich bevorzugt auf die Peak-to-Peak-Distanz zweier Auswölbung in der Ebene senkrecht zur Absorptionsschicht.

Gemäß einer weiteren bevorzugten Weiterbildung der Erfindung ist vorgesehen, dass beim Behandeln des Laserspiegels mit einer Serie fokussierter Heizlaserstrahlen die Heizdauer des Heizlaserstrahls zwischen 1 $\mu$s und 1 ms beträgt. Dies hat sich als besonders gut geeignet erwiesen, um Aufwölbungen mit Höhen größer 50 nm zu erzeugen. Eine kürzere Heizdauer kann zu einer Zerstörung des bereitgestellten Laserspiegels führen. Eine längere Heizdauer kann zu einer Zerstörung der Dielektrika-Schicht führen, wodurch insbesondere die hochreflektierenden Eigenschaften des DOE verloren gehen könnten.

Nicht nur die bereits erwähnten Parameter, sprich die zweite Wellenlänge, die Leistung des Heizlaserstrahls, die Fokussierung des Heizlaserstrahls, die Heizdauer, die optionale Absorptionsschicht und die Dielektrika-Schicht des Laserspiegels haben einen Einfluss auf die Höhe der Auswölbungen, sondern auch die Schichtdicke der Absorptionsschicht. Die Schichtdicke der Absorptionsschicht bezieht sich auf die Ausdehnung der Absorptionsschicht senkrecht zu ihrer Erstreckung. Gemäß einer bevorzugten Weiterbildung ist vorgesehen, dass die Schichtdicke der Absorptionsschicht größer als 30 nm ist. Besonders bevorzugt beträgt die Schichtdicke der Absorptionsschicht mehr als 40 nm. Dies ermöglicht besonders einfach, einen hohen Wärmeeintrag pro Volumen in die Absorptionsschicht zu generieren, so dass die Auswölbungen eine Höhe von mehr als 50 nm aufweisen.

Gemäß einer bevorzugten Weiterbildung der Erfindung ist vorgesehen, dass beim Behandeln des Laserspiegels mit einer Serie fokussierter Heizlaserstrahlen auf einer Fläche von wenigstens 0,25 cm$^2$ die Mehrzahl an zueinander gitterartig angeordneten Auswölbungen erzeugt werden. Die gitterartige Anordnung der Auswölbungen bezieht sich bevorzugt auf die Ebene parallel zur Absorptionsschicht, wobei die gitterartige Anordnung der Auswölbungen schiefwinklig, rechtwinklig, zentriert-rechteckig, hexagonal, oder quadratisch sein kann. Auch sind Abweichungen von der Translationssymmetrie der gitterartigen Anordnung möglich. Weiter bevorzugt sind auf der Fläche von wenigstens 0,25 cm$^2$ die Mehrzahl an Auswölbungen vorhanden, wobei die Auswölbungen bevorzugt 3 $\mu$m oder weniger als 3 $\mu$m voneinander beabstandet sind. Der Abstand zwischen zwei Auswölbungen bezieht sich bevorzugt auf die Peak-to-Peak-Distanz zweier Auswölbung in der Ebene senkrecht zur Absorptionsschicht.

Grundsätzlich ist es möglich, dass beim Behandeln des Laserspiegels mit einer Serie fokussierter Heizlaserstrahlen, der Heizlaserstrahl während der Behandlung in zwei Dimensionen abgelenkt wird und der Laserspiegel währenddessen nicht verschoben wird. Derart wird zuverlässig die gitterartige Anordnung an Auswölbungen erzielt. Gemäß einer bevorzugten Weiterbildung des Verfahrens ist allerdings vorgesehen, dass beim Behandeln des Laserspiegels mit einer Serie fokussierter Heizlaserstrahlen, der Laserspiegel während der Behandlung entlang einer Verschieberichtung senkrecht zum Heizlaserstrahl verschoben wird und der Heizlaserstrahl während der Behandlung senkrecht zur Verschieberichtung abgelenkt wird. Dies ermöglich auf besonders schnelle und präzise Weise ein DOE herzustellen, dessen Dielektrika-Schicht auf einer Fläche von wenigstens 0,25 cm$^2$ eine Mehrzahl an zueinander gitterartig angeordneten Auswölbungen aufweist. Weiterhin ergibt sich darüber die notwendige Präzision, damit die Mehrzahl an Auswölbungen bevorzugt 3 $\mu$m oder weniger als 3 $\mu$m voneinander beabstandet sind. Durch das Verschieben des Laserspiegels während der Behandlung entlang der Verschieberichtung senkrecht zum Heizlaserstrahl und das Ablenken des Heizlaserstrahls während der Behandlung senkrecht zur Verschieberichtung lassen sich innerhalb von weniger als 60 Minuten auf der Fläche von 0,25 cm$^2$ die Mehrzahl von Auswölbungen erzeugen.

Weiterer Vorteile und technische Merkmale des Verfahrens zum Herstellen eines DOEs ergeben sich für den Fachmann aus der Beschreibung des DOEs, der Beschreibung der Vorrichtung zur Durchführung des Verfahrens sowie aus der Beschreibung des Ausführungsbeispiels.

Weiterhin betrifft die Erfindung ein diffraktives optisches Element, DOE, zur Strahlenformung eines Laserstrahles mit einer ersten Wellenlänge von wenigstens 100 nm, wobei das diffraktive optische Element einen schichtartigen Aufbau aus einem Substrat, einer Absorptionsschicht und einer Dielektrika-Schicht aufweist, wobei sich die Absorptionsschicht zwischen dem Substrat und der Dielektrika-Schicht befindet und dazu ausgestaltet ist unter Generierung eines Wärmeeintrages in die Absorptionsschicht einen Heizlaserstrahl zu absorbieren, wobei die Dielektrika-Schicht eine Mehrzahl an Auswölbungen aufweist, wobei die Auswölbungen eine Höhe senkrecht zur Dielektrika-Schicht aufweisen, und wobei wenigstens eine Auswölbung eine Höhe von mehr als der Hälfte der ersten Wellenlänge aufweist.

Der Kern der Erfindung liegt somit darin, dass die für die Strahlenformung des Laserstrahls notwendigen unterschiedlichen optischen Weglängen am DOEs durch Auswölbungen der Dielektrika-Schicht umgesetzt werden. Somit lässt sich eine sehr hohe Beugungseffizienz erzielen, welche umgerechnet auf die Herstellungsgenauigkeit von quasikontinuierlichen DOEs einer Anzahl Stufen von mehr als 2500 entsprechen kann. Bevorzugt ist vorgesehen, dass die Höhe der wenigstens einen Auswölbungen des DOEs größer als 50 nm ist. Somit eignet sich das DOE bevorzugt zur Strahlenformung von Laserstrahlen mit einer ersten Wellenlänge, die größer als 100 nm ist. Weiter ist bevorzugt vorgesehen, dass die Auswölbungen bezogen auf eine Ebene senkrecht zur Dielektrika-Schicht gaußförmig sind und eine Halbwertsbreite von wenigstens 2 $\mu$m aufweisen. Weiter bevorzugt ist die Halbwertsbreite nicht größer als 6 $\mu$m.

Insbesondere handelt es sich beim DOE um ein reflektives DOE. Dies bedeutet, dass die Strahlenformung des Laserstrahles mit der ersten Wellenlänge durch Reflexion des Laserstrahls an dem diffraktiven optischen Element erfolgt. Im Gegensatz zu DOEs, bei denen die Strahlenformung durch Transmission des Laserstahls durch das DOE erfolgt (transmittive DOEs), handelt es sich also bevorzugt um ein DOE, bei dem der Laserstrahl reflektiert wird. Dies hat den Vorteil, dass im Gegensatz zu transmittiven DOEs nur geringe Absorptionsverluste vorhanden sind und eine hohe Effizienz ermöglicht wird.

Weiterhin wird im Folgenden eine Vorrichtung zur Durchführung des obigen Verfahrens beschrieben, wobei die Vorrichtung einen Heizlaser zur Erzeugung eines Heizlaserstrahls mit der zweiten Wellenlänge, eine Laserspiegelpositionierungsvorrichtung zum Bereitstellen eines Laserspiegels, eine Fokussierungsvorrichtung zur Fokussierung des Heizlaserstrahls auf den Laserspiegel, eine Ablenkungsvorrichtung und eine Steuerung umfasst, wobei die Laserspiegelpositionierungsvorrichtung dazu ausgestaltet ist, den Laserspiegel in eine Verschieberichtung zu verschieben, die Ablenkungsvorrichtung dazu ausgestaltet ist, den Heizlaserstrahl senkrecht zur Verschieberichtung abzulenken und die Steuerung dazu ausgestaltet ist, den Heizlaser, die Ablenkungsvorrichtung und die Laserspiegelpositionierungsvorrichtung anzusteuern. Insbesondere ist vorgesehen, dass die Ablenkungsvorrichtung dazu ausgestaltet ist den Heizlaserstrahl in eine Richtung abzulenken. In anderen Worten ist die Ablenkungsvorrichtung bevorzugt eine 1-dimensionale Ablenkungsvorrichtung. Diese haben den Vorteil, dass sie sehr große Ablenkungswinkel mit hoher Präzision und Schnelligkeit einstellen können. Um mittels der Vorrichtung eine gitterartige Anordnung an Auswölbungen erzeugen zu können, ist vorgesehen, dass die Laserspiegelpositionierungsvorrichtung derart ausgestaltet ist, dass der Laserspiegel in die Verschieberichtung verschiebbar ist. Die Laserspiegelpositionierungsvorrichtung ist bevorzugt eine computergesteuerte Positionierungsstage mit Nanometerauflösung.

Bezüglich weiterer Vorteile und technischer Merkmale des Verfahrens zum Herstellen des diffraktiven optischen Elementes, des diffraktiven optischen Elementes und der Vorrichtung zur Durchführung des Verfahrens wird auf die Figuren und die weitere Beschreibung verwiesen.

Nachfolgend wird die Erfindung unter Bezugnahme auf die Zeichnungen anhand eines bevorzugen Ausführungsbeispiels exemplarisch erläutert.

In der Zeichnung zeigen

Fig. 1    eine schematische Darstellung des Verfahrens zum Herstellen eines diffraktiven optischen Elementes sowie eine Schnittdarstellung des diffraktiven optischen Elementes gemäß einer bevorzugten Ausführungsform der Erfindung und

Fig. 2    eine schematische Vorrichtung zur Durchführung des Verfahrens zur Herstellung des diffraktiven optischen Elementes.

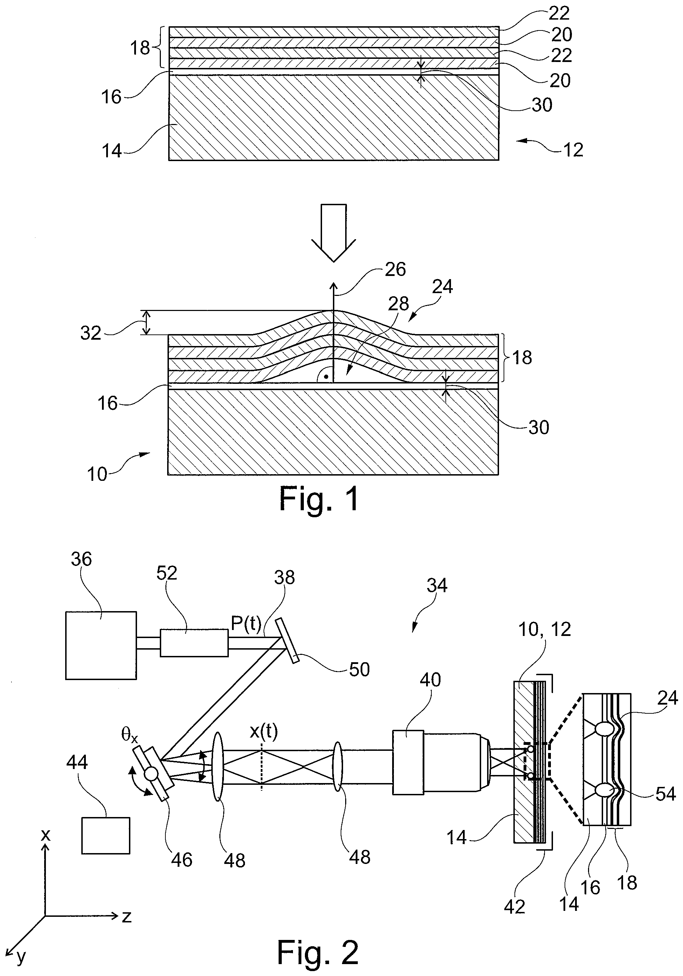

Figur 1 zeigt eine schematische Darstellung des Verfahrens zum Herstellen eines diffraktiven optischen Elementes 10, abgekürzt DOE 10, sowie eine Schnittdarstellung des DOEs 10 gemäß einer bevorzugten Ausführungsform der Erfindung. Das Verfahren sieht zwei Schritte vor, wobei in einem ersten Schritt ein Laserspiegel 12 als Rohling für das DOE 10 bereitgestellt wird. Der Laserspiegel 12 ist dazu geeignet einen Laserstrahl mit einer ersten Wellenlänge $\lambda_1$ zu reflektieren. Im vorliegenden Fall handelt es sich um einen Laserspiegel 12 zur Reflexion von Laserstrahlen mit einer Wellenlänge $\lambda_1$ von 532 nm, also von Laserlicht im grünen Wellenlängenbereich. Weiterhin ist der Laserspiegel 12 geeignet für einen Hochleistungslaser und weist eine hohe Zerstörschwelle auf. Der Laserspiegel 12 weist in diesem Ausführungsbeispiel einen schichtartigen Aufbau aus einem Substrat 14, einer Absorptionsschicht 16 und einer Dielektrika-Schicht 18 auf. Alle drei Schichten 14, 16, 18 sind vorliegend parallel zueinander, wobei die Absorptionsschicht 16 zwischen dem Substrat 14 und der Dielektrika-Schicht 18 angeordnet ist. Die Dielektrika-Schicht 18 umfasst ihrerseits mehrere Materialschichten 20, 22 aus zwei unterschiedlichen Materialien, die abwechselnd geschichtet sind, wobei das erste Material bezogen auf die erste Wellenlänge $\lambda_1$ einen hohen Brechungsindex aufweist und das zweite Material bezogen auf die erste Wellenlänge $\lambda_1$ einen niedrigen Brechungsindex aufweist.

In einem zweiten Schritt des Verfahrens zum Herstellen des DOEs 10 werden Auswölbungen 24 der Dielektrika-Schicht 18 erzeugt. Im hier bevorzugten Ausführungsbeispiel handelt es sich um rotationssymmetrische Auswölbungen, die an einer Grenzfläche der Dielektrika-Schicht 18 zur Absorptionsschicht 16 erzeugt werden. Eine Rotationsachse 26 der rotationssymmetrischen Auswölbungen 24 liegt senkrecht zur Absorptionsschicht 16. Wie in Figur 1 zu erkennen, liegt im vorliegenden Fall an der Auswölbung 24 die Dielektrika-Schicht 18 nicht an der Absorptionsschicht 16 auf, sondern ist an der Auswölbung 24 von der Absorptionsschicht 16 abgelöst. An der Auswölbung 24 befindet sich zwischen der Dielektrika-Schicht 18 und der Absorptionsschicht 16 ein Hohlraum 28. Bei einem Schnitt durch die Auswölbung 24 entlang einer Ebene senkrecht zur Absorptionsschicht 16, ist die Auswölbung 24 bezogen auf diese Ebene gaußförmig.

Im hier bevorzugten Ausführungsbeispiel ist das Substrat 14 des Laserspiegels 12 und somit auch des DOEs 10 aus Quarzglas und die Absorptionsschicht 16 aus amorphem Silizium. Weiterhin ist vorliegend eine Schichtdicke 30 der Absorptionsschicht 40 nm. Die Schichtdicke 30 bezieht sich auf die Ausdehnung der Absorptionsschicht 28 senkrecht zu ihrer Erstreckung.

Die Auswölbungen 24 der Dielektrika-Schicht 18 werden erzeugt, indem der Laserspiegel 12 mit einer Serie fokussierter Heizlaserstrahlen 38 (nur in Figur 2 dargestellt) mit einer zweiten Wellenlänge $\lambda_2$ behandelt wird, wobei ein Wärmeeintrag 54 des Heizlaserstrahls 38 in ein Volumen der Absorptionsschicht 16 des Laserspiegels 12 größer als 30 kJ/cm$^3$ beträgt. Derart weist wenigstens eine Auswölbung 24 der erzeugten Auswölbungen 24 eine Höhe 32 von zumindest der Hälfte der ersten Wellenlänge $\lambda_1$ auf. Vorliegende weist also wenigstens eine Auswölbung 24 eine Höhe 32 von zumindest 266 nm auf.

Figur 2 zeigt schematisch eine Vorrichtung 34 zur Durchführung des Verfahrens zur Herstellung des DOEs 10. Die Vorrichtung 34 umfasst einen Heizlaser 36 zur Erzeugung des Heizlaserstrahls 38 mit der zweiten Wellenlänge $\lambda_2$, eine Fokussierungsvorrichtung 40 zur Fokussierung des Heizlaserstrahls 38, eine Laserspiegelpositionierungsvorrichtung 42 und eine Steuerung 44. Im hier bevorzugten Ausführungsbeispiel wird vom Heizlaser 36 die zweite Wellenlänge $\lambda_2$ von 532 nm erzeugt. Weiterhin umfasst die Vorrichtung 34 eine Ablenkungsvorrichtung 46 zur Ablenkung des Heizlaserstrahls 38. Vorliegend wird dies mit einem 1-dimensionalen Galvo-Scanner 46 umgesetzt, der dazu ausgestaltet ist, den Heizlaserstrahl 38 in eine Richtung, abzulenken. In Figur 2 entspricht die Richtung des Heizlaserstrahls 38 zum Laserspiegel 12 der z-Richtung. Der Galvo-Scanner 46 erlaubt den Heizlaserstrahl 38 in x-Richtung abzulenken. Weiterhin umfasst die Vorrichtung 34 einen akustooptischen Modulator 52, der die Intensität und somit die Leistung des Heizlaserstrahls 38 verändern kann.

Um mittels der Vorrichtung eine gitterartige Anordnung an Auswölbungen 24 der Dielektrika-Schicht 18 zu erzeugen, ist die Laserspiegelpositionierungsvorrichtung 42 derart ausgestaltet, dass der Laserspiegel 12 verschiebbar ist. Hier ist die Verschieberichtung des Laserspiegels 12 die y-Richtung, sprich senkrecht zur Richtung des Heizlaserstrahls 38 und senkrecht zur Ablenkungsrichtung des Galvo-Scanners 46.

Weiterhin ist die Steuerung dazu ausgestaltet, den Heizlaser 36, den akustooptischen Modulator 52, die Ablenkungsvorrichtung 46 und die Laserspiegelpositionierungsvorrichtung 42 anzusteuern.

Weiterhin ist im hier bevorzugten Ausführungsbeispiel die Fokussierungsvorrichtung 40 zur Fokussierung des Heizlaserstrahls 38 durch ein Konfokalmikroskop umgesetzt. Das Konfokalmikroskop ($f_{Objektiv}$ = 2 cm; $f_{Tubus}$ = $f_2$ = 30 cm) fokussiert den Heizlaserstrahl 38 auf die Absorptionsschicht 16.

Der Heizlaser 36, die Fokussierungsvorrichtung 40, die Laserspiegelpositionierungsvorrichtung 42 und die Ablenkungsvorrichtung 46 sind derart mit Hilfe eines Spiegels 50 und Linsen 48 zueinander angeordnet, dass der Heizlaserstrahl 38 die Absorptionsschicht 16 des Laserspiegels senkrecht trifft. Der Heizlaserstrahl 38 trifft eine Rückseite des Laserspiegels 12 und dringt durch das Substrat 14 zur Absorptionsschicht 16 vor. In der Absorptionsschicht 16 kommt es durch die Absorption des Heizlaserstrahls 38 zu einem lokalen Wärmeeitrag 54 von wenigstens 30 kJ/cm$^3$, was zur Entstehung der Auswölbung 24 führt.

Bezugszeichenliste

| | |
|---|---|
| 10 | diffraktives optische Element, DOE |
| 12 | Laserspiegel |
| 14 | Substrat |
| 16 | Absorptionsschicht |
| 18 | Dielektrika-Schicht |
| 20 | Materialschicht aus erstem Material |
| 22 | Materialschicht aus zweitem Material |
| 24 | Auswölbung |
| 26 | Rotationsachse |
| 28 | Hohlraum |
| 30 | Schichtdicke der Absorptionsschicht |
| 32 | Höhe der Auswölbung |
| 34 | Vorrichtung |
| 36 | Heizlaser |
| 38 | Heizlaserstrahl |
| 40 | Fokussierungsvorrichtung, Konfokalmikroskop |
| 42 | Laserspiegelpositionierungsvorrichtung, Positionierungsstage |
| 44 | Steuerung |
| 46 | Ablenkungsvorrichtung, Galvo-Scanner |
| 48 | Linse |
| 50 | Spiegel |
| 52 | akustooptischer Modulator |
| 54 | Wärmeeintrag |

**Patentansprüche**

1. Verfahren zum Herstellen eines diffraktiven optischen Elementes (10) zur Strahlenformung eines Laserstrahles mit einer ersten Wellenlänge ($\lambda_1$) von wenigstens 100 nm umfassend die Schritte:

- Bereitstellen eines Laserspiegels (12), wobei der Laserspiegel (12) einen schichtartigen Aufbau aus einem Substrat (14) und einer Dielektrika-Schicht (18) aufweist, wobei die Dielektrika-Schicht (18) an dem Substrat (14) anliegt, oder wobei der Laserspiegel (12) einen schichtartigen Aufbau aus einem Substrat (14), einer Dielektrika-Schicht (18) und einer Absorptionsschicht (16) aufweist, wobei sich die Absorptionsschicht (16) zwischen dem Substrat (14) und der Dielektrika-Schicht (18) befindet,
- Erzeugen einer Mehrzahl von Auswölbungen (24) der Dielektrika-Schicht (18), durch Behandeln des Laserspiegels (12) mit einer Serie fokussierter Heizlaserstrahlen (38) mit einer zweiten Wellenlänge ($\lambda_2$), wobei die Mehrzahl von Auswölbungen (24) eine Höhe (32) senkrecht zur Dielektrika-Schicht (18) aufweisen, und wobei wenigstens eine Auswölbung eine Höhe (32) von zumindest der Hälfte der ersten Wellenlänge ($\lambda_1$) aufweist.

2. Verfahren nach Anspruch 1, wobei der bereitgestellte Laserspiegel und das diffraktive optische Element eine Transmission von T ≤ 10$^{-2}$ für die erste Wellenlänge ($\lambda_1$) aufweisen.

3. Verfahren nach einem der vorhergehenden Ansprüche, wobei die Absorptionsschicht (16) aus Silizium oder Gold besteht, das Substrat (14) aus Glas, CaF$_2$, MgF$_2$ oder Saphir besteht und/oder die Dielektrika-Schicht (18) aus SiO$_2$, Ta$_2$O$_5$, TiO$_2$, HfO$_2$, Al$_2$O$_3$, MgF$_2$, LaF$_3$, und/oder ZrO$_2$ besteht.

4. Verfahren nach einem der vorhergehenden Ansprüche, wobei beim Behandeln des Laserspiegels (12) mit einer Serie fokussierter Heizlaserstrahlen (38) ein Wärmeeintrag des Heizlaserstrahls (38) in ein Volumen der Dielektrika-Schicht (18) oder in ein Volumen der Absorptionsschicht (16) des Laserspiegels (12) wenigstens 30 kJ/cm$^3$ beträgt.

5. Verfahren nach einem der vorhergehenden Ansprüche, wobei beim Behandeln des Laserspiegels (12) mit einer Serie fokussierter Heizlaserstrahlen (38) die zweite Wellenlänge ($\lambda_2$), eine Leistung des Heizlaserstrahls (38), eine Fokussierung des Heizlaserstrahls (38), eine Heizdauer, die Absorptionsschicht (16) des Laserspiegels (12), die Dielektrika-Schicht (18) des Laserspiegels (12) und/oder eine Schichtdicke (30) der Absorptionsschicht (16) derart gewählt werden, dass wenigstens eine Auswölbung (26) eine Höhe (32) von zumindest der Hälfte der ersten Wellenlänge ($\lambda_1$) aufweist.

6. Verfahren nach einem der vorhergehenden Ansprüche, wobei die Schichtdicke (16) der Absorptionsschicht (16) größer als 30 nm ist.

7. Verfahren nach einem der vorhergehenden Ansprüche, wobei beim Behandeln des Laserspiegels (12) mit einer Serie fokussierter Heizlaserstrahlen (38) die zweite Wellenlänge ($\lambda_2$) zwischen 200 und 700 nm liegt und die Absorptionsschicht (16) des Laserspiegels (12) aus Silizium, oder die zweite Wellenlänge ($\lambda_2$) zwischen 200 und 2000 nm liegt und die Absorptionsschicht (16) des Laserspiegels (12) aus Gold ist und/oder die zweite Wellenlänge ($\lambda_2$) zwischen 100 und 2000 nm liegt.

8. Verfahren nach einem der vorhergehenden Ansprüche, wobei beim Behandeln des Laserspiegels (12) mit einer Serie fokussierter Heizlaserstrahlen (38) eine Leistung des Heizlaserstrahls (38) wenigstens 10 mW beträgt.

9. Verfahren nach einem der vorhergehenden Ansprüche, wobei beim Behandeln des Laserspiegels (12) mit einer Serie fokussierter Heizlaserstrahlen (38) der Heizlaserstrahl (38) mit einer Halbwertsbreite von höchstens 5 $\mu$m auf die Absorptionsschicht (16) und/oder die Dielektrika-Schicht (18) fokussiert wird.

10. Verfahren nach einem der vorhergehenden Ansprüche, wobei beim Behandeln des Laserspiegels (12) mit einer Serie fokussierter Heizlaserstrahlen (38) die Heizdauer des Heizlaserstrahls zwischen 1 $\mu$s und 1 ms beträgt.

11. Verfahren nach einem der vorhergehenden Ansprüche, wobei beim Behandeln des Laserspiegels (12) mit einer Serie fokussierter Heizlaserstrahlen (38), der Laserspiegel (12) während der Behandlung entlang einer Verschieberichtung senkrecht zum Heizlaserstrahl (38) verschoben wird und der Heizlaserstrahl (38) während der Behandlung senkrecht zur Verschieberichtung abgelenkt wird, oder der Laserspiegel (12) während der Behandlung entlang zweier zueinander orthogonaler Verschieberichtungen beide senkrecht zum Heizlaserstrahl (38) verschoben wird.

12. Diffraktives optisches Element (10) zur Strahlenformung eines Laserstrahles mit einer ersten Wellenlänge ($\lambda_1$) von wenigstens 100 nm, wobei die Strahlenformung des Laserstrahles mit der ersten Wellenlänge ($\lambda_1$) durch Reflexion des Laserstrahls an dem diffraktiven optischen Element (10) erfolgt, wobei das diffraktive optische Element (10) einen schichtartigen Aufbau aus einem Substrat (14), einer Dielektrika-Schicht (18) und einer Absorptionsschicht (16) aufweist, wobei sich die Absorptionsschicht (16) zwischen dem Substrat (14) und der Dielektrika-Schicht (18) befindet und dazu ausgestaltet ist unter Generierung eines Wärmeeintrages in die Absorptionsschicht (16) einen Heizlaserstrahl (38) zu absorbieren, wobei die Dielektrika-Schicht (18) eine Mehrzahl an Auswölbungen (24) aufweist, die Auswölbungen (24) eine Höhe (32) senkrecht zur Dielektrika-Schicht (18) aufweisen, und wenigstens eine Auswölbung (24) eine Höhe (32) von zumindest der Hälfte der ersten Wellenlänge ($\lambda_1$) aufweist, wobei das diffraktive optische Element (10) mit einem Verfahren gemäss einem der vorhergehenden Ansprüche hergestellt wurde.

## Claims

1. Method for producing a diffractive optical element (10) for beam shaping a laser beam having a first wavelength ($\lambda_1$) of at least 100 nm, comprising the steps of:

providing a laser mirror (12),
wherein the laser mirror (12) has a layered structure comprising a substrate (14) and a dielectric layer (18), wherein the dielectric layer (18) abuts against the substrate (14), or wherein the laser mirror (12) has a layered structure comprising a substrate (14), a dielectric layer (18) and an absorption layer (16), wherein the absorption layer (16) is located between the substrate (14) and the dielectric layer (18); creating a plurality of bulges (24) of the dielectric layer (18) by treating the laser mirror (12) with a series of focused heating laser beams (38) having a second wavelength ($\lambda_2$),
wherein said plurality of bulges (24) have a height (32) perpendicular to said dielectric layer (18), and wherein at least one bulge has a height (32) of at least one-half of said first wavelength ($\lambda_1$).

2. Method according to claim 1, wherein the provided laser mirror and the diffractive optical element have a transmission of $T \leq 10^{-2}$ for the first wavelength ($\lambda_1$).

3. Method according to any one of the preceding claims, wherein the absorption layer (16) consists of silicon or gold, the substrate (14) consists of glass, $CaF_2$, $MgF_2$ or sapphire and/or the dielectric layer (18) consists of $SiO_2$, $Ta_2O_5$, $TiO_2$, $HfO_2$, $Al_2O_3$, $MgF_2$, $LaF_3$, and/or $ZrO_2$.

4. Method according to any one of the preceding claims, wherein when treating the laser mirror (12) with a series of focused heating laser beams (38), a heat input of the heating laser beam (38) into a volume of the dielectric layer (18) or into a volume of the absorption layer (16) of the laser mirror (12) is at least 30 kJ/cm$^3$.

5. Method according to any one of the preceding claims, wherein when treating the laser mirror (12) with a series of focused heating laser beams (38), the second wavelength ($\lambda_2$), a power of the heating laser beam (38), a focusing of the heating laser beam (38), a heating duration, the absorption layer (16) of the laser mirror (12), the dielectric layer (18) of the laser mirror (12) and/or a layer thickness (30) of the absorption layer (16) are selected in such a way that at least one bulge (26) has a height (32) of at least half of the first wavelength ($\lambda_1$).

6. Method according to any one of the preceding claims, wherein the layer thickness (16) of the absorption layer (16) is greater than 30 nm.

7. Method according to any one of the preceding claims, wherein when treating the laser mirror (12) with a series of focused heating laser beams (38), the

second wavelength ($\lambda_2$) is between 200 and 700 nm and the absorption layer (16) of the laser mirror (12) is made of silicon, or the second wavelength ($\lambda_2$) is between 200 and 2000 nm and the absorption layer (16) of the laser mirror (12) is made of gold and/or the second wavelength ($\lambda_2$) is between 100 and 2000 nm.

8. Method according to any one of the preceding claims, wherein when treating the laser mirror (12) with a series of focused heating laser beams (38), a power of the heating laser beam (38) is at least 10 mW.

9. Method according to any one of the preceding claims, wherein when treating the laser mirror (12) with a series of focused heating laser beams (38), the heating laser beam (38) is focused with a full width at half maximum of at most 5 $\mu$m onto the absorption layer (16) and/or the dielectric layer (18).

10. Method according to any one of the preceding claims, wherein when treating the laser mirror (12) with a series of focused heating laser beams (38), the heating duration of the heating laser beam is between 1 $\mu$s and 1 ms.

11. Method according to any one of the preceding claims, wherein when treating the laser mirror (12) with a series of focused heating laser beams (38), the laser mirror (12) is displaced during the treatment along a displacement direction perpendicular to the heating laser beam (38) and the heating laser beam (38) is deflected during the treatment perpendicular to the displacement direction, or the laser mirror (12) is displaced during the treatment along two displacement directions orthogonal to one another, both perpendicular to the heating laser beam (38).

12. Diffractive optical element (10) for beam shaping of a laser beam having a first wavelength ($\lambda_1$) of at least 100 nm, wherein the beam shaping of the laser beam with the first wavelength ($\lambda_1$) is effected by reflection of the laser beam at the diffractive optical element (10), wherein the diffractive optical element (10) has a layer-like structure comprising a substrate (14), a dielectric layer (18) and an absorption layer (16), wherein the absorption layer (16) is located between the substrate (14) and the dielectric layer (18) and is designed to absorb a heating laser beam (38) while generating a heat input into the absorption layer (16), wherein the dielectric layer (18) has a plurality of bulges (24), wherein the bulges (24) have a height (32) perpendicular to the dielectric layer (18), and wherein at least one bulge (24) has a height (32) of at least half of the first wavelength ($\lambda_1$) wherein the diffractive optical element (10) has been produced by a method according to any of the preceding claims.

**Revendications**

1. Procédé de fabrication d'un élément optique diffractif (10) pour la mise en forme d'un faisceau laser ayant une première longueur d'onde ($\lambda_1$) d'au moins 100 nm, comprenant les étapes :

- fournir un miroir laser (12),
le miroir laser (12) ayant une structure en couches comprenant un substrat (14) et une couche diélectrique (18), la couche diélectrique (18) étant en contact avec le substrat (14), ou le miroir laser (12) ayant une structure en couches comprenant un substrat (14), une couche diélectrique (18) et une couche d'absorption (16), la couche d'absorption (16) étant située entre le substrat (14) et la couche diélectrique (18),
- générer une pluralité de renflements (24) de la couche diélectrique (18) en traitant le miroir laser (12) avec une série de faisceaux laser chauffants focalisés (38) avec une deuxième longueur d'onde ($\lambda_2$),

la pluralité de renflements (24) ayant une hauteur (32) perpendiculaire à la couche diélectrique (18), et au moins un renflement ayant une hauteur (32) d'au moins la moitié de la première longueur d'onde ($\lambda_1$).

2. Procédé selon la revendication 1, dans lequel le miroir laser fourni et l'élément optique diffractif ont une transmission de T $\leq$ 10$^{-2}$ pour la première longueur d'onde ($\lambda_1$).

3. Procédé selon l'une des revendications précédentes, dans lequel la couche d'absorption (16) est constituée de silicium ou d'or, le substrat (14) est constitué de verre, de CaF$_2$, MgF$_2$ ou de saphir et/ou la couche diélectrique (18) est constituée de SiO$_2$, Ta$_2$O$_5$, TiO$_2$, HfO$_2$, Al$_2$O$_3$, MgF$_2$, LaF$_3$, et/ou ZrO$_2$.

4. Procédé selon l'une des revendications précédentes, dans lequel, lors du traitement du miroir laser (12) avec une série de faisceaux laser chauffants focalisés (38), un apport de chaleur du faisceau laser chauffant (38) dans un volume de la couche diélectrique (18) ou dans un volume de la couche d'absorption (16) du miroir laser (12) est d'au moins 30 kJ/cm$^3$.

5. Procédé selon l'une des revendications précédentes, dans lequel, lors du traitement du miroir laser (12) avec une série de faisceaux laser chauffants focalisés (38), la deuxième longueur d'onde ($\lambda_2$), une puissance du faisceau laser chauffant (38), une focalisation du faisceau laser chauffant (38), une durée de chauffage, la couche d'absorption (16) du miroir laser (12), la couche diélectrique (18) du miroir laser (12) et/ou une épaisseur de couche (30) de la couche d'absorption (16) sont choisies de telle sorte qu'au moins un renflement (26) ait une hauteur (32) d'au moins la moitié de la première longueur d'onde ($\lambda_1$).

6. Procédé selon l'une des revendications précédentes, dans lequel l'épaisseur de couche (16) de la couche d'absorption (16) est supérieure à 30 nm.

7. Procédé selon l'une des revendications précédentes, dans lequel lors du traitement du miroir laser (12) avec une série de faisceaux laser chauffants focalisés (38), la deuxième longueur d'onde ($\lambda_2$) est comprise entre 200 et 700 nm et la couche d'absorption (16) du miroir laser (12) est en silicium, ou la deuxième longueur d'onde ($\lambda_2$) est comprise entre 200 et 2000 nm et la couche d'absorption (16) du miroir laser (12) est en or et/ou la deuxième longueur d'onde ($\lambda_2$) est comprise entre 100 et 2000 nm.

8. Procédé selon l'une des revendications précédentes, dans lequel lors du traitement du miroir laser (12) avec une série de faisceaux laser chauffants focalisés (38), une puissance du faisceau laser chauffant (38) est d'au moins 10 mW.

9. Procédé selon l'une des revendications précédentes, dans lequel lors du traitement du miroir laser (12) avec une série de faisceaux laser chauffants focalisés (38), le faisceau laser chauffant (38) est focalisé sur la couche d'absorption (16) et/ou la couche diélectrique (16) avec une largeur à mi-hauteur d'au plus 5 $\mu$m.

10. Procédé selon l'une des revendications précédentes, dans lequel lors du traitement du miroir laser (12) avec une série de faisceaux laser chauffants focalisés (38), la durée de chauffage du faisceau laser chauffant est comprise entre 1 $\mu$s et 1 ms.

11. Procédé selon l'une des revendications précédentes, dans lequel lors du traitement du miroir laser (12) avec une série de faisceaux laser chauffants focalisés (38), le miroir laser (12) est déplacé pendant le traitement le long d'une direction de déplacement perpendiculaire au faisceau laser chauffant (38) et le faisceau laser chauffant (38) est dévié perpendiculairement à la direction de déplacement pendant le traitement, ou le miroir laser (12) est déplacé pendant le traitement le long de deux directions de déplacement mutuellement orthogonales, toutes deux perpendiculaires au faisceau laser chauffant (38).

12. Elément optique diffractif (10) pour la mise en forme d'un faisceau laser ayant une première longueur d'onde ($\lambda_1$) d'au moins 100 nm, la mise en forme du faisceau laser ayant la première longueur d'onde ($\lambda_1$) s'effectuant par réflexion du faisceau laser sur l'élément optique diffractif (10), l'élément optique diffractif (10) ayant une structure en couches comprenant un substrat (14), une couche diélectrique (18) et une couche d'absorption (16), la couche d'absorption (16) étant située entre le substrat (14) et le couche diélectrique (18) et conçue pour absorber un faisceau laser chauffant (38) à l'aide d'une génération d'un apport de chaleur dans la couche d'absorption (16), la couche diélectrique (18) présentant une pluralité de renflements (24), les renflements (24) ayant une hauteur (32) perpendiculaire à la couche diélectrique (18), et au moins un renflement (24) ayant une hauteur (32) d'au moins la moitié de la première longueur d'onde ($\lambda_1$), l'élément optique diffractif (10) étant fabriqué par le procédé selon l'une des revendications précédentes.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090273772 A1
- DE 102018200029 A1
- DE 10158859 A1

**In der Beschreibung aufgeführte Nicht-Patentliteratur**

- **SMJUK, A.Y.** ; **LAWANDY, N.M.** Direct laser writing of diffractive optics in glass. *Opt. Lett.*, 1997, vol. 22 (13), 1030-1032
- **SHORE, B.W. et al.** Design of high-efficiency dielectric reflection gratings. *J. Opt. Soc. Am. A*, 1997, vol. 14 (5), 1124-1136